# FASCICULE DE BREVET EUROPEEN

(11) **EP 4 161 751 B1**
(45) Date de publication et mention de la délivrance du brevet: **28.01.2026**
(21) Numéro de dépôt: 21734402.7
(22) Date de dépôt: 26.05.2021
(51) Int. Cl.: B29C 33/48, B29C 70/46, B29C 70/48, B29C 33/42, F01D 25/24, F02C 7/04, B29L 31/00

(54) **OUTILLAGE D'INJECTION POUR PIECE DE REVOLUTION EN FORME DE TONNEAU**
INJEKTIONSWERKZEUG FÜR EIN ZYLINDRISCHES TONNENFÖRMIGES TEIL
INJECTION TOOL FOR A REVOLUTION BARREL FORMED PART

(30) Priorité: 04.06.2020 US 202063034700 P
(43) Date de publication de la demande: 12.04.2023
(73) Titulaire: SAFRAN AIRCRAFT ENGINES, 75015 Paris (FR)
(72) Inventeur: JAUSSAUD, Raoul, 77550 MOISSY-CRAMAYEL (FR); FABRE, Hubert, Jean, Marie, 77550 MOISSY-CRAMAYEL (FR); TERRY, Paul, FRANKLIN, New Hampshire 03235 (US)
(74) Mandataire: Cabinet Beau de Loménie
(86) Numéro de dépôt international: PCT/FR2021/050952
(87) Numéro de publication internationale: WO 2021/245338

(56) Documents cités:
- EP-A1- 2 755 815
- JP-A- H07 243 512
- US-A- 4 209 161
- US-B2- 10 166 708
- US-B2- 8 322 971

## Description

### Arrière-plan de l'invention

La présente invention concerne le domaine des matériaux composites comprenant une matrice polymère renforcée par une structure fibreuse et plus particulièrement l'utilisation de ces matériaux dans la fabrication de pièces aéronautiques ou de turbomachines.

Dans le domaine aéronautique, on cherche à réduire la masse des composants des moteurs tout en maintenant à un haut niveau leurs propriétés mécaniques. Plus particulièrement, dans une turbomachine aéronautique, le carter de soufflante définissant le contour de la veine d'entrée d'air du moteur et à l'intérieur duquel est logé le rotor supportant les aubes de la soufflante est maintenant réalisé en matériau composite. De forme de révolution, il comprend une virole pourvue à ses extrémités amont et aval de brides externes pour la fixation à d'autres parties structurelles du moteur, comme le profil d'entrée d'air à l'amont et le carter intermédiaire à l'aval. Le carter supporte en outre divers composants et doit pouvoir retenir les débris résultant d'une rupture d'aube de soufflante ou les objets ingérés en entrée du moteur.

La fabrication d'un carter de soufflante en matériau composite débute par la mise en place par enroulement d'un renfort en fibres sur un mandrin dont le profil épouse celui du carter à réaliser. Le renfort fibreux peut être réalisé, par exemple, par tissage tridimensionnel ou multicouche comme cela est décrit dans le brevet US 8 322 971. Ce renfort fibreux constitue une préforme fibreuse tubulaire formant une seule pièce. La fabrication se poursuit par la densification de la préforme fibreuse par une matrice polymère qui consiste à imprégner la préforme par une résine et à polymériser cette dernière pour obtenir la pièce finale.

US 4 209 161 A décrit un outillage d'injection d'une résine polymère comprenant une forme en tonneau avec un diamètre rentrant de plus petit diamètre délimitant ladite pièce de révolution en une partie en amont et une partie en aval dudit diamètre rentrant, ladite partie en amont comportant une partie intermédiaire en contre-dépouille, dans lequel, pour permettre un démoulage de ladite pièce en tonneau une fois l'injection et la polymérisation de ladite résine polymère effectuée, l'outillage comporte d'une part un fût central tronconique et d'autre part un insert sectorisé dont une surface externe épouse toute la surface interne de ladite partie de pièce de révolution.

L'invention concerne plus particulièrement le mode de fabrication où l'imprégnation de la préforme fibreuse est réalisée par le procédé de moulage par injection dit RTM (pour Resin Transfert Molding). Selon ce procédé, on enferme la préforme fibreuse en la compactant dans un moule rigide de géométrie figée comprenant une première partie formant support de la préforme fibreuse et un contre moule que l'on vient déposer **sur la préforme** fibreuse et dont la forme correspond au carter que l'on souhaite obtenir, et on injecte la résine sous pression et température contrôlée à l'intérieur du moule après avoir rapproché les parois des deux parties de moule et y avoir fait le vide le cas échéant. Une fois la résine injectée, on procède à sa polymérisation par chauffage du moule et après l'injection et la polymérisation, la pièce finale est démoulée puis détourée pour enlever les excès de résine et les chanfreins sont usinés pour obtenir le carter souhaité.

Pour faciliter ce démoulage, l'outillage d'injection qui doit être parfaitement étanche est en général constitué d'un moule à deux fûts intérieurs adjacents reproduisant la veine qui présente une forme en « diabolo », de deux flasques amont et aval pour former les deux rebords du carter, et d'un contre-moule formé de plusieurs secteurs extérieurs. Ces secteurs et les flasques amont / aval sont retirés par l'extérieur. Les deux fûts intérieurs sont désaccouplés puis retirés de chaque côté du carter en suivant les dépouilles naturelles de la veine.

Or, dans certaines configuration de carter, il existe un resserrement de la veine à l'amont du carter, la veine présentant alors une forme en « tonneau » qui évolue par exemple d'un premier diamètre à l'amont à un deuxième diamètre plus important au niveau d'une zone centrale puis à nouveau à un troisième diamètre plus petit à l'aval et qui interdit donc tout démoulage de la pièce finale du fait de l'impossibilité de retrait du fût amont. La différence entre petit et grand diamètre peut par exemple être comprise entre 30 et 100 millimètres pour un diamètre moyen du carter pouvant être de l'ordre de 1500 millimètres à 3500 millimètres.

### Objet et résumé de l'invention

L'invention a donc pour but de proposer un outillage d'injection pour la fabrication d'un carter de turbine à gaz en matériau composite présentant une forme en tonneau qui permette de réaliser de façon simple le démoulage, et ce notamment sans augmenter de manière significative les étapes et le nombre de pièces mises en œuvre.

Ce but est atteint grâce à un outillage d'injection selon la revendication 1.

Ainsi, le démoulage de pièces de révolution présentant une forme en tonneau peut être obtenu simplement par la formation d'un insert formant support dont la pente de jonction avec le fût est supérieure à la pente maximale de la face interne de ces pièces de révolution en forme de tonneau.

Selon un mode de réalisation préférentiel, ledit insert sectorisé comporte au moins six inserts et de préférence huit.

Avantageusement, lesdits inserts sont creux et rendus étanche à la résine polymère par des joints d'étanchéité.

Selon un mode de réalisation, l'outillage comporte en outre une troisième partie de fût sensiblement radiale assurant la jonction entre lesdites première et deuxième parties de fût au niveau dudit diamètre rentrant.

De préférence, ladite pièce de révolution en tonneau comporte successivement entre une bride amont et une bride aval : une partie d'extrémité amont, ladite partie intermédiaire amont en contre-dépouille, une partie centrale de plus grand diamètre, une partie intermédiaire aval et une partie d'extrémité aval.

Avantageusement, ledit fût central tronconique et lesdits flasques amont et aval sont solidarisés entre eux par une pluralité de liaisons vissées. Toutefois, ledit fût central tronconique et ledit flasque aval peuvent former une pièce unique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'un moteur aéronautique comportant un carter de soufflante obtenu à partir de l'outillage d'injection conforme à l'invention, et
- la figure 2 est une demi-vue en coupe axiale de l'outillage d'injection permettant la fabrication du carter de soufflante de la figure 1.

### Description détaillée de modes de réalisation

L'invention s'applique à un carter de soufflante de moteur aéronautique à turbine à gaz.

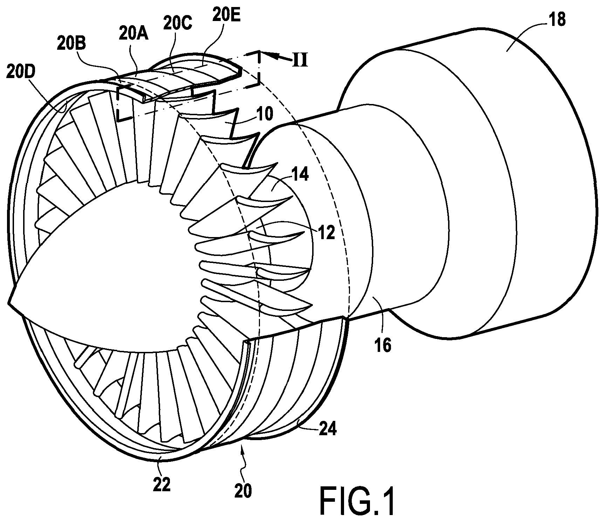

La figure 1 montre de façon schématique un tel moteur aéronautique à turbine à gaz comprenant, de l'amont vers l'aval dans le sens de l'écoulement du flux gazeux, une soufflante 10 disposée en entrée du moteur, un compresseur 12, une chambre de combustion 14, une turbine haute-pression 16 et une turbine basse pression 18. Le moteur comporte des carters successifs correspondant à différents éléments du moteur et dont la surface interne définit la veine d'entrée d'air du moteur. Ainsi, la soufflante 10 est entourée par un carter de soufflante 20 présentant une forme de révolution et réalisé à partir d'un renfort en fibres par exemple de carbone, verre, aramide ou céramique, densifié par une matrice en polymère, par exemple époxyde, bismaléimide ou polyimide. Le renfort de fibres est obtenu de façon connue par tissage tridimensionnel ou multicouche, par exemple un tissage à armure "interlock", et la matrice par voie liquide suivant les procédés d'injection connus comme le procédé de moulage dit RTM évoqué en préambule.

Le carter de soufflante 20 est muni de brides externes 22, 24 à ses extrémités amont et aval afin de permettre son montage et sa liaison avec d'autres éléments du moteur non représentés. Entre ses brides amont et aval, le carter de soufflante qui présente sensiblement une forme de tonneau comporte une partie centrale sensiblement cylindrique 20A ayant un plus fort diamètre que des parties intermédiaires amont 20B et aval 20C sensiblement tronconiques se raccordant progressivement à elle de part et d'autre selon respectivement une pente vers l'amont et une pente vers l'aval, la partie intermédiaire amont 20B étant elle-même raccordée à une partie d'extrémité amont 20D sensiblement cylindrique se terminant par la bride amont 22 et la partie intermédiaire aval 20C étant elle-même raccordée au niveau d'un diamètre rentrant 20CE (en général le diamètre le plus faible de la veine délimitant la pièce de révolution en une partie en amont et une partie en aval de ce diamètre) à une partie d'extrémité aval 20E sensiblement tronconique se terminant par la bride aval 24. Comme explicité en préambule, la partie centrale 20A de plus fort diamètre en générant la partie intermédiaire amont en contre-dépouille 20B interdit le recours aux outillages d'injection RTM standards et oblige donc à développer un nouvel outillage. En outre, la présence de deux dépouilles vers des plus petits diamètres rend le carter non démoulable.

Selon l'invention, il est ainsi proposé pour résoudre le problème posé par le démoulage d'un carter ayant une forme de tonneau, d'ajouter entre le fût support du carter et le carter une pluralité d'inserts qui viennent combler la partie non démoulable de ce carter en rendant le démoulage à nouveau possible. Le fût présente en outre sur sa partie aval une dépouille naturelle facilitant également son retrait une fois les inserts enlevés.

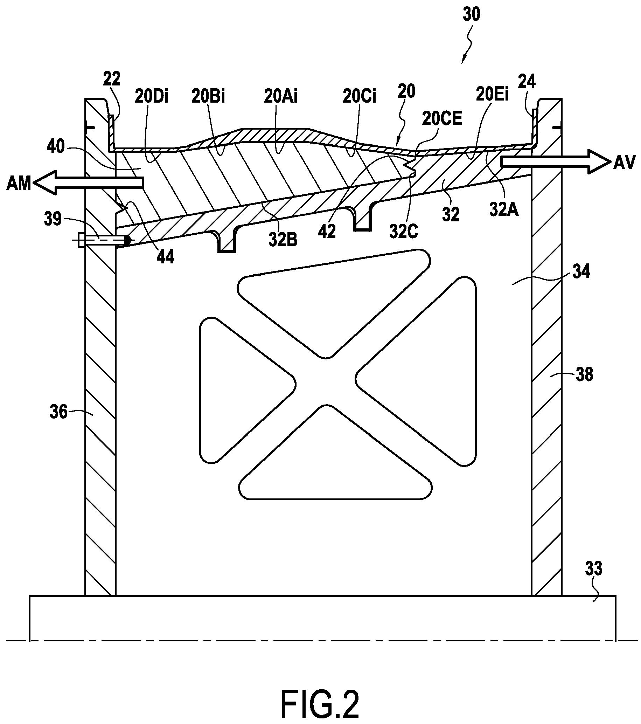

La figure 2 montre une section de l'outillage d'injection selon l'invention supportant le carter de soufflante 20 sans le contre-moule sectorisé extérieur venant classiquement fermer le moule.

Plus précisément, conformément à l'invention, cet outillage 30 comporte un fût central tronconique 32 maintenu sur un axe d'entrainement 33 par une pluralité de rayons raidisseurs 34, de préférence partiellement ajourés pour en réduire la masse, ainsi qu'un flasque amont 36 et un flasque aval 38. Le fût central tronconique est en aval du diamètre rentrant 20CE sur une partie d'extrémité 32A en contact direct avec la surface interne 20Ei de la partie d'extrémité aval 20E pour permettre un retrait du fût par l'aval suivant la dépouille naturelle de la veine. Les flasques amont et aval destinés au moulage des brides externes 22, 24 sont solidarisés au fût central tronconique 32 par exemple par une liaison vissée (voir la référence 39 pour le flasque amont, la liaison au flasque aval étant hors du plan de coupe). On notera que le flasque aval 38 et le fût central tronconique 32 pourraient toutefois aussi être issus d'une même pièce.

Cet outillage comporte en outre un insert sectorisé 40 d'au moins six et typiquement huit inserts jointifs et disposés autour du fût central 32 pour supporter la préforme fibreuse 20 en amont du diamètre rentrant 20CE. Lors de l'assemblage, les inserts sont posés sur le flasque 38 lui-même posé alors à plat et ils reposent sur le fût central 32, du fait de la gravité qui a tendance à les plaquer contre ce fût. Ils sont en outre maintenus angulairement ou radialement grâce à des cônes de centrage 42 disposés sur la face 32C. Le flasque 36 est ensuite rajouté et d'autres éléments de centrage 44 disposés sur ce flasque viennent contraindre l'insert pour assurer son maintien final. Les inserts doivent en effet être bien ajustés avec le fût central car l'injection de la résine est effectuée sous pression après génération de vide dans le moule. Les propriétés mécaniques et de stabilité dimensionnelle du matériau de l'insert (typiquement de l'acier) et du fût facilitent la bonne réussite de l'injection et notamment la gestion de la dilatation lors de la polymérisation par chauffage. Bien entendu, des classiques joints d'étanchéité (non représentés) doivent aussi être prévus entre les différentes pièces du moule pour garantir qu'il soit bien étanche.

Plus précisément, l'insert sectorisé dont la surface externe épouse la partie de carter en amont du diamètre rentrant 20CE, c'est-à-dire à la fois la surface interne 20Ai de la partie centrale 20A, les surfaces internes 20Bi et 20Ci des parties intermédiaires amont 20B et aval 20C et la surface interne 20Di de la partie d'extrémité amont 20D, présente une surface interne 32B formant la plus grande partie du tronc de cône du fût 32 (la plus petite partie étant formée par la surface 32A et ces deux parties du tronc de cône se rejoignant au niveau du diamètre rentrant 20CE par une surface radiale 32C formant décroché) et dont l'inclinaison est strictement plus grande que celle de la partie intermédiaire amont en contre-dépouille 20B dont la pente vers l'amont est la plus grande pente vers l'amont du carter 20 (la pente vers l'aval de la partie 20C peut être en effet plus grande comme illustré). On notera que la pente de la surface interne 32B doit impérativement être plus grande que la plus grande pente du côté où s'effectuera le démoulage (s'il y avait par exemple plusieurs pentes vers l'amont) et qu'il est préférable de choisir comme côté de démoulage le côté qui permettra la plus faible pente pour éviter notamment que l'insert ne soit trop massif.

Le processus d'injection durant sa phase de moulage ne diffère pas du processus classique d'injection RTM, la préforme fibreuse étant placée dans le moule fermé de manière étanche. Puis, on injecte la résine liquide thermodurcissable à faible viscosité dans le moule pour imprégner toute la partie fibreuse de la préforme. La polymérisation est ensuite réalisée généralement par chauffage du moule selon un ou plusieurs cycles consécutifs pour parvenir au degré de densification souhaité. L'injection et la polymérisation achevées, la pièce finalement obtenue peut alors être démoulée selon des étapes simplifiées par rapport à celles mises en œuvre dans le processus classique du fait de la modification de l'outillage.

Les étapes de démoulage diffèrent des étapes standards mais sont par contre simplifiées puisqu'à l'issue de l'étape de polymérisation, le contre-moule ayant été retiré dans une première étape du démoulage et la surface extérieure de la pièce finale présentant donc la forme extérieure en tonneau du carter à réaliser, il suffit dans une seconde étape de retirer le flasque amont 36 (après dévissage des fixations 39 le reliant au fût central) afin de libérer les inserts sectorisés 40 qui peuvent être retirés les uns après les autres (ou une première moitié puis une seconde) selon l'amont, repéré sur la figure 2 par la direction AM, plus précisément selon la direction de la pente 32B. Le fût central tronconique 34 désolidarisé ou non du flasque aval 38 (après dévissage éventuel des fixations au fût) peut alors être lui-même retiré dans une étape suivante selon l'aval repéré par la direction opposée AV libérant la pièce finale qui peut enfin être détourée pour enlever l'excès de résine et obtenir ainsi le carter de soufflante 20. De façon alternative, le fût 32 et le flasque 38 peuvent être maintenus en place et c'est la pièce finale qui est retirée vers l'amont avec tout moyen de retrait (levage) approprié.

Pour toutes ces étapes, du fait de leurs dimensions (plusieurs mètres de diamètre) et de leurs masses (plusieurs tonnes), toutes ces pièces doivent être manipulées avec précaution et les retraits s'effectueront donc de préférence au moyen d'un palan, de sangles ou tout autre système de levage similaire, chacune des pièces du moule comportant alors des organes nécessaires à leur déplacement. Ces organes de manipulation (non représentés) comprennent par exemple des perçages de fixation coopérant par vissage avec des anneaux d'arrimages montés sur des têtes d'écrous ou tout autre perçage. De manière générale, la technique de manipulation et de fixation de grandes pièces relativement à des systèmes de manutention de charges lourdes et/ou volumineuses, via des anneaux d'arrimages vissés audites charges, est de type connue en soi. On notera toutefois que pour réduire la masse soulevée, les inserts seront de préférence creux mais rendus parfaitement étanche (cette étanchéité étant faite par des joints non représentés sur la face 32) pour éviter de les remplir de résine polymère lors de la phase d'injection.

On notera également que pour éviter toute détérioration de la pièce finale lors des étapes de retrait successifs, cette pièce sera maintenue de préférence au moyen d'un anneau de manutention, d'une sangle ou tout autre moyen équivalent de manutention de grandes pièces de révolution. Ainsi, la pièce finale de carter ne comporte pas d'organe spécifique pour sa manipulation et ne risque pas d'être détériorée lors de cette manipulation.

## Revendications

1. Outillage d'injection d'une résine polymère dans une préforme fibreuse pour la fabrication d'un carter de soufflante en matériau composite (20) comprenant une forme en tonneau avec un diamètre rentrant (20CE) de plus petit diamètre délimitant ledit carter de soufflante en une partie en amont et une partie en aval dudit diamètre rentrant, ladite partie en amont comportant une partie intermédiaire en contre-dépouille (20B), dans lequel, pour permettre un démoulage dudit carter de soufflante en tonneau une fois l'injection et la polymérisation de ladite résine polymère effectuée, l'outillage d'injection est constitué d'une part d'un fût central tronconique (32) comprenant une première partie de fût (32A) en contact direct avec une surface interne (20Ei) dudit carter de soufflante en aval dudit diamètre rentrant et une deuxième partie de fût (32B) et d'autre part d'un insert sectorisé (40) dont une surface externe épouse une surface interne (20Di, 20Bi, 20Ai, 20Ci) dudit carter de soufflante en amont dudit diamètre rentrant et une surface interne est en contact direct avec ladite deuxième partie de fût sur laquelle repose ledit insert sectorisé, ladite première partie de fût comportant une dépouille naturelle permettant un retrait dudit fût central tronconique par l'aval et ladite surface interne de l'insert sectorisé présentant une inclinaison strictement supérieure à une pente maximale d'une surface externe de l'insert sectorisé correspondant à ladite partie intermédiaire amont en contre-dépouille (20B) dudit carter de soufflante, de sorte à permettre un retrait dudit insert sectorisé par l'amont.

2. Outillage d'injection selon la revendication 1, dans lequel ledit insert sectorisé comporte au moins six inserts et de préférence huit.

3. Outillage d'injection selon la revendication 2, dans lequel lesdits inserts sont creux et rendus étanche à la résine polymère par des joints d'étanchéité.

4. Outillage d'injection selon l'une quelconque des revendications 1 à 3, comportant en outre une troisième partie de fût (32C) sensiblement radiale assurant la jonction entre lesdites première et deuxième parties de fût au niveau dudit diamètre rentrant.

5. Outillage d'injection selon l'une quelconque des revendications 1 à 4, dans lequel ledit carter de soufflante en tonneau comporte successivement entre une bride amont (36) et une bride aval (38) : une partie d'extrémité amont (20D), ladite partie intermédiaire amont en contre-dépouille, une partie centrale (20A) de plus grand diamètre, une partie intermédiaire aval (20C) et une partie d'extrémité aval (20E).

6. Outillage d'injection selon l'une quelconque des revendications 1 à 5, dans lequel ledit fût central tronconique et lesdits flasques amont et aval sont solidarisés entre eux par une pluralité de liaisons vissées (39).

7. Outillage d'injection selon l'une quelconque des revendications 1 à 6, dans lequel ledit fût central tronconique et ledit flasque aval forment une pièce unique.

8. Outillage d'injection selon l'une quelconque des revendications 1 à 7, dans lequel, pour assurer le centrage angulaire dudit insert sectorisé sur ledit fût central tronconique, des éléments de centrage (42) sont disposés en vis à vis sur ledit insert sectorisé et ledit fût central tronconique respectivement.

9. Outillage d'injection selon l'une quelconque des revendications 1 à 8, dans lequel ledit insert sectorisé est constitué en un matériau métallique dont les propriétés mécaniques et de stabilité dimensionnelle facilitent la gestion de la dilatation lors de la polymérisation par chauffage.

## Patentansprüche

1. Werkzeug zur Einspritzung eines Polymerharzes in eine Faservorform für die Herstellung eines Gebläsegehäuses aus Verbundmaterial (20), das eine tonnenförmige Gestalt mit einem eingezogenen Durchmesser (20CE) mit kleinerem Durchmesser umfasst, welcher das Gebläsegehäuse in einen stromaufwärts des eingezogenen Durchmessers gelegenen Teil und einen stromabwärts desselben gelegenen Teil begrenzt, wobei der stromaufwärts gelegene Teil einen hinterschnittenen Zwischenteil (20B) beinhaltet, wobei, um ein Entformen des tonnenförmigen Gebläsegehäuses zu ermöglichen, sobald die Einspritzung und die Polymerisation des Polymerharzes erfolgt sind, das Spritzwerkzeug einerseits aus einem kegelstumpfförmigen zentralen Schaft (32), der einen ersten Schaftteil (32A) in direktem Kontakt mit einer Innenfläche (20Ei) des Gebläsegehäuses stromabwärts des eingezogenen Durchmessers und einen zweiten Schaftteil (32B) umfasst, und andererseits aus einem sektorierten Einsatz (40) besteht, von dem eine Außenfläche sich mit einer Innenfläche (20Di, 20Bi, 20Ai, 20Ci) des Gebläsegehäuses stromaufwärts des eingezogenen Durchmessers zusammenfügt und eine Innenfläche in direktem Kontakt mit dem zweiten Schaftteil steht, auf welchem der sektorierte Einsatz aufliegt, wobei der erste Schaftteil eine natürliche Hinterschneidung aufweist, die ein Zurückziehen des kegelstumpfförmigen zentralen Schafts von der stromabwärtigen Seite her ermöglicht, und wobei die Innenfläche des sektorierten Einsatzes eine Schräge aufweist, die strikt größer ist als eine maximale Neigung einer Außenfläche des sektorierten Einsatzes, die dem hinterschnittenen stromaufwärtigen Zwischenabschnitt (20B) des Gebläsegehäuses entspricht, so dass ein Zurückziehen des sektorierten Einsatzes von der stromaufwärtigen Seite her ermöglicht wird.

2. Spritzwerkzeug nach Anspruch 1, wobei der sektorierte Einsatz zumindest sechs und vorzugsweise acht Einsätze beinhaltet.

3. Spritzwerkzeug nach Anspruch 2, wobei die Einsätze hohl sind und durch Dichtungen gegen das Polymerharz abgedichtet sind.

4. Spritzwerkzeug nach einem der Ansprüche 1 bis 3, das ferner einen im Wesentlichen radialen dritten Schaftteil (32C) beinhaltet, der die Verbindung zwischen dem ersten und dem zweiten Schaftteil auf dem Niveau des eingezogenen Durchmessers sicherstellt.

5. Spritzwerkzeug nach einem der Ansprüche 1 bis 4, wobei das tonnenförmige Gebläsegehäuse zwischen einem stromaufwärtigen Flansch (36) und einem stromabwärtigen Flansch der Reihe nach beinhaltet: einen stromaufwärtigen Endteil (20D), den hinterschnittenen stromaufwärtigen Zwischenteil, einen zentralen Teil (20A) mit größerem Durchmesser, einen stromabwärtigen Zwischenteil (20C) und einen stromabwärtigen Endteil (20E).

6. Spritzwerkzeug nach einem der Ansprüche 1 bis 5, wobei der kegelstumpfförmige zentrale Schaft und der stromaufwärtige und stromabwärtige Flansch durch mehrere Schraubverbindungen (39) fest miteinander verbunden sind.

7. Spritzwerkzeug nach einem der Ansprüche 1 bis 6, wobei der kegelstumpfförmige zentrale Schaft und der stromabwärtige Flansch ein einziges Stück bilden.

8. Spritzwerkzeug nach einem der Ansprüche 1 bis 7, wobei, um die Winkelzentrierung des sektorierten Einsatzes auf dem kegelstumpfförmigen zentralen Schaft sicherzustellen, Zentrierelemente (42) jeweils gegenüberliegend auf dem sektorierten Einsatz und dem kegelstumpfförmigen zentralen Schaft angeordnet sind.

9. Spritzwerkzeug nach einem der Ansprüche 1 bis 8, wobei der sektorierte Einsatz aus einem metallischen Material besteht, dessen mechanische und Formstabilitäts-Eigenschaften die Steuerung der Ausdehnung während der Polymerisation durch Erhitzen erleichtern.

## Claims

1. A tooling for injecting a polymer resin into a fibrous preform for the manufacture of a fan casing in composite material comprising a barrel shape with an inside diameter of smaller diameter delimiting said fan casing into an upstream portion and a downstream portion of said inside diameter, said upstream portion including a back-draft intermediate portion, wherein, to allow a demolding of said barrel-shaped fan casing once the injection and the polymerization of said polymer resin are carried out, the injection tooling consisting of on the one hand a frustoconical central drum comprising a first drum portion in direct contact with an inner surface of said fan casing downstream of said inside diameter and a second drum portion and on the other hand a segmented insert whose outer surface matches an inner surface of said portion of the said fan casing upstream of said inside diameter and an inner surface is in direct contact with said second drum portion on which said segmented insert rests, said first drum portion including a natural draft allowing a withdrawal of said frustoconical central drum from downstream and said inner surface of the segmented insert having an inclination strictly greater than a maximum slope of an outer surface of the segmented insert corresponding to said back-draft upstream intermediate portion of said fan casing, so as to allow a withdrawal of said segmented insert from upstream.

2. The injection tooling according to claim 1, wherein said segmented insert includes at least six, preferably eight, inserts.

3. The injection tooling according to claim 2, wherein said inserts are hollow and made impervious to polymer resin by seals.

4. The injection tooling according to any one of claims 1 to 3, further including a third substantially radial drum portion ensuring the junction between said first and second drum portions at said inside diameter.

5. The injection tooling according to any one of claims 1 to 4, wherein said barrel-shaped fan casing includes successively between an upstream clamp and a downstream clamp: an upstream end portion, said back-draft upstream intermediate portion, a central portion of larger diameter, a downstream intermediate portion and a downstream end portion.

6. The injection tooling according to any one of claims 1 to 5, wherein said frustoconical central drum and said upstream and downstream flanges are secured together by a plurality of screwed connections.

7. The injection tooling according to any one of claims 1 to 6, wherein said frustoconical central drum and said downstream flange form a single part.

8. The injection tooling according to any one of claims 1 to 7, wherein, to ensure radial and angular centering of said segmented insert on said frustoconical central drum, centering elements are disposed opposite each other on said segmented insert and said frustoconical central drum respectively.

9. The injection tooling according to any one of claims 1 to 8, wherein said segmented insert is made of a metal material whose mechanical properties of dimensional stability facilitate the management of the expansion during the polymerization by heating.
